Europäisches Patentamt

European Patent Office

Office européen des brevets

(11) Veröffentlichungsnummer: **0 482 468 A1**

# EUROPÄISCHE PATENTANMELDUNG

(21) Anmeldenummer: **91117519.8**

(22) Anmeldetag: **14.10.91**

(51) Int. Cl.5: **C04B 41/87**, C04B 33/00

(30) Priorität: **25.10.90 IT 2187790**

(43) Veröffentlichungstag der Anmeldung:
**29.04.92 Patentblatt 92/18**

(84) Benannte Vertragsstaaten:
**DE ES FR GB GR IT NL**

(71) Anmelder: **Bayer S.p.A.
Viale Certosa 126
I-20156 Milano(IT)**

(72) Erfinder: **Salge, Henning, Dr.
Fürvelser Strasse 37
W-5000 Köln 80(DE)**
Erfinder: **Schlegel, Christian
Via Virgilio 1-2
I-21100 Venegono Sup. (Va.)(IT)**

(74) Vertreter: **Braun, Rolf, Dr. et al
c/o Bayer AG Konzernverwaltung RP Patente
Konzern
W-5090 Leverkusen 1 Bayerwerk(DE)**

(54) **Keramische Masse zur Herstellung der Deckschicht von zweischichtig aufgebauten Steinzeugfliesen.**

(57) Die Erfindung betrifft keramische Massen zur Herstellung der Deckschicht von zweischichtig aufgebauten Steinzeugfliesen, die die folgende Zusammensetzung:

| | |
|---|---|
| Ton (weißbrennend) | 13-40 Gew.-% |
| Wollastonit | 0-25 Gew.-% |
| Kalium-Feldspat | 8-32 Gew.-% |
| Natrium-Feldspat | 5-15 Gew.-% |
| Lithium-Feldspat | 0-12 Gew.-% |
| Nephelin-Syenit | 3-15 Gew.-% |
| Fritte | 0-25 Gew.-% |
| ZnO | 0- 5 Gew.-% |
| calcinierter Kaolin/Ton | 6-24 Gew.-% |
| calcinierte Tonerde | 3-16 Gew.-% |
| $ZrSiO_4$ | 0-10 Gew.-% |

sowie eine Trocken- und Brennschwindung von 4 bis 12 % und einen thermischen Ausdehnungskoeffizienten von $(50-90) \times 10^{-7} \, °K^{-1}$ (bei 20 bis 400°C) aufweisen.

EP 0 482 468 A1

Die vorliegende Erfindung betrifft keramische Massen zur Herstellung der Deckschicht von zweischichtig aufgebauten unglasierten Steinzeugfliesen.

Aus der Literatur sind sowohl dichtgebrannte, unglasierte als auch glasierte Steinzeugfliesen bekannt. Beide Fliesentypen haben ihre Vor- und Nachteile. So besitzen die dichtgebrannten, unglasierten Steinzeugfliesen gegenüber den glasierten Fliesen größere Oberflächenhärte und Verschleißfestigkeit. Glasierte Fliesen bieten hingegen eine breitere Palette an Möglichkeiten zur dekorativen Oberflächengestaltung. Hierzu gehören neben der Verwendung von keramischen Dekoren auf oder unter der Glasur auch die breiteren Einfärbmöglichkeiten von Glasuren.

Übliche, unglasierte, hell ausbrennende, keramische Steinzeugmassen mit geeignetem Dichtbrandverhalten und der erforderlichen Fleckunempfindlichkeit werden bei Temperaturen oberhalb 1.200°C gebrannt. Diese Produkte lassen jedoch wegen ihrer von weiß abweichenden Brennfarbe keine leuchtenden und gesättigten Einfärbungen zu. Außerdem sind sie wegen einer geringen Restporosität häufig fleckempfindlich. Hinzu kommt, daß die zur Herstellung dichtgebrannter Steinzeugfliesen mit heller Brennfarbe benötigten Tone nicht beliebig verfügbar sind. Es sind nur wenige Lagerstätten mit begrenzten Vorratsmengen bekannt (z.B. Westerwald).

Bei niedrigeren Temperaturen gebrannte Fliesen vom Steinzeug- bzw. Halbsteinzeug-Typ mit einer Wasseraufnahme über ca. 0,3 Gew.-% sind, wenn sie nicht glasiert sind, im allgemeinen fleckempfindlich. Zur Erzielung geschlossener, dichter Oberflächen müssen diese Produkte glasiert werden. Andererseits kann man bei der Herstellung dieser Produkte auf dunkel ausbrennende, weit verbreitete Tone zurückgreifen.

Aufgabe war es daher, Massen zur Verfügung zu stellen, mit denen es gelingt, durch Aufbringen in Form einer relativ dicken Deckschicht auf eine beliebig farbige Steinzeug- oder Halbsteinzeugbasismasse Steinzeugfliesen herzustellen, die zumindest an der Oberfläche dicht sintern, abriebfest sind und durch Farbkörper auch bei relativ niedrigen Konzentrationen in leuchtenden Farben mit hohem Sättigungsgrad eingefärbt werden können. Halbsteinzeugmassen sind solche mit einer Restporosität von 3 bis 6 %.

Diese Aufgabe konnte durch die erfindungsgemäßen Massen gelöst werden.

Gegenstand der Erfindung sind keramische Massen zur Herstellung der Deckschicht von zweischichtig aufgebauten Steinzeugfliesen, welche dadurch gekennzeichnet sind, daß sie folgende Zusammensetzung:

| | |
|---|---|
| Ton (weißbrennend) | 13-40 Gew.-% |
| Wollastonit | 0-25 Gew.-% |
| Kalium-Feldspat | 8-32 Gew.-% |
| Natrium-Feldspat | 5-15 Gew.-% |
| Lithium-Feldspat | 0-12 Gew.-% |
| Nephelin-Syenit | 3-15 Gew.-% |
| Fritte | 0-25 Gew.-% |
| ZnO | 0-5 Gew.-% |
| calcinierter Kaolin/Ton | 6-24 Gew.-% |
| calcinierte Tonerde | 3-16 Gew.-% |
| $ZrSiO_4$ | 0-10 Gew.-% |

sowie eine Trocken- und Brennschwindung von 4 bis 12 % und einen thermischen Ausdehnungskoeffizienten von $(50\text{-}90) \times 10^{-7}$ °$K^{-1}$ (bei 20 bis 400°C) aufweisen und gegebenenfalls Farbkörper und/oder Pigmente bis zu max. 5 Gew.-% enthalten.

Ein weiterer Gegenstand der Erfindung ist die Verwendung der erfindungsgemäßen keramischen Massen zur Herstellung der Deckschicht von zweischichtig aufgebauten, gepreßten Steinzeug- oder Halbsteinzeugfliesen.

Die erfindungsgemäßen Massen führen zu Deckschichten, die eine Wasseraufnahme von Null aufweisen sowie aus einer Glasphase und kristallinen Phasen bestehen.

Die mit den erfindungsgemäßen Massen hergestellten Deckschichten sind fleckunempfindlich, dicht und blasenfrei und weisen eine fast weiße Brennfarbe und eine hohe Verschleißfestigkeit auf. Diese so erzeugten Deckschichten können mit allen erdenklichen Farbkörpern eingefärbt werden, so daß auch leuchtende Farbtöne erhalten werden können. Da nur mehr die Deckschicht und nicht mehr die gesamte Fliese eingefärbt werden muß, wird ein Teil der sonst üblichen Farbkörpermenge eingespart. Des weiteren ist es mit den erfindungsgemäßen Massen möglich, relativ dicke Deckschichten (bis 1/4 der Gesamtdicke) auszubilden, ohne daß es zu Verkrümmungen in der fertigen Fliese kommt und ohne daß die Fliesenkanten zum Abplatzen neigen. Durch die Dicke der Deckschicht können derartige Fliesen zudem geschliffen und poliert werden. Damit eine gut haftende Verbindung zwischen der Deckschicht und der Grundschicht erreicht wird, sollte die erfindungsgemäße Masse nach dem gleichen Verfahren aufbereitet sein wie die Masse für die Grundschicht. Das heißt z.B., daß bei Verwendung von Sprühmassen sowohl die erfindungsgemäße Masse wie auch die Masse für die Grundschicht sprühgetrocknet sein sollten. Bei Anwendung des Trockenverfahrens sollten beide Massen trocken aufbereitet sein.

Bei der Herstellung der Fliesen wird nach Einfüllung der Masse für die Grundschicht in die Preßform die gegebenenfalls durch Farbkörper-Zusatz eingefärbte erfindungsgemäße Masse eingegeben und beide Schichten miteinander verpreßt. An das Pressen schließen sich die Trocknung und der Brand an.

Die Erfindung soll anhand des folgenden Beispiels näher erläutert werden, ohne daß darin eine Einschränkung zu sehen ist.

Beispiel

Eine gebräuchliche Steinzeugmasse mit einer Trocken- und Brennschwindung von 10,2 % und einem thermischen Ausdehnungskoeffizienten von $79 \times 10^{-7}$ $°K^{-1}$ (bei 20 bis 400°C) wurde in einem Mischgranulator zu einem Massegranulat mit einer Granulatgröße von 50 bis 500 $\mu$m verarbeitet.

Die Deckschichtmasse folgender Zusammensetzung:

| Ton (weißbrennend) | 18 Gew.-% |
|---|---|
| Wollastonit | 19 Gew.-% |
| Kalium-Feldspat | 13 Gew.-% |
| Natrium-Feldspat | 5 Gew.-% |
| Nephelin-Syenit | 7 Gew.-% |
| Fritte (Alkali-Ca-Zn-alumosilikatisch) | 19 Gew.-% |
| calcinierter Kaolin/Ton | 12 Gew.-% |
| calcinierte Tonerde | 7 Gew.-% |

mit einer Trocken- und Brennschwindung von 10,0 % und einem thermischen Ausdehnungskoeffizienten von $72 \times 10^{-7}$ $°K^{-1}$ (bei 20 bis 400°C) wurde nach dem gleichen Verfahren granuliert.

Grundschichtmasse und Deckschichtmasse wurden nacheinander im Verhältnis 4:1 schichtweise in die Preßform einer hydraulischen Presse gegeben und mit 150 bar zu Fliesen vom Format 15 x 15 cm verpeßt.

Nach einer zweistündigen Trocknung bei 130°C wurden die Preßlinge in einem Rollenofen bei 1200°C und einer Brenndauer von 70 Minuten gebrannt.

Die Fliesen wiesen nach dem Brand keinerlei Verformung auf. Die Wasseraufnahme der Gebrauchsoberfläche war 0. Tintenflecken ließen sich mit einem feuchten Schwamm rückstandslos entfernen.

**Patentansprüche**

**1.** Keramische Massen zur Herstellung der Deckschicht von zweischichtig aufgebauten Steinzeugfliesen, dadurch gekennzeichnet, daß sie folgende Zusammensetzung:

| Ton (weißbrennend) | 13-40 Gew.-% |
|---|---|
| Wollastonit | 0-25 Gew.-% |
| Kalium-Feldspat | 8-32 Gew.-% |
| Natrium-Feldspat | 5-15 Gew.-% |
| Lithium-Feldspat | 0-12 Gew.-% |
| Nephelin-Syenit | 3-15 Gew.-% |
| Fritte | 0-25 Gew.-% |
| ZnO | 0-5 Gew.-% |
| calcinierter Kaolin/Ton | 6-24 Gew.-% |
| calcinierte Tonerde | 3-16 Gew.-% |
| ZrSiO$_4$ | 0-10 Gew.-% |

sowie eine Trocken- und Brennschwindung von 4 bis 12 % und einen thermischen Ausdehnungskoeffizienten von $(50-90) \times 10^{-7}$ $°K^{-1}$ (bei 20 bis 400°C) aufweisen.

2.  Keramische Massen gemäß Anspruch 1, dadurch gekennzeichnet, daß sie bis zu maximal 5 Gew.-% Farbkörper und/oder Pigmente enthalten.

3.  Verwendung der keramischen Massen gemäß Anspruch 1 oder 2 zur Herstellung der Deckschicht von zweischichtig aufgebauten Steinzeugfliesen.

**Patentanspruch für folgenden Vertragsstaat: ES**

1.  Verfahren zur Herstellung der Deckschicht von zweischichtig aufgebauten Steinzeugfliesen, dadurch gekennzeichnet, daß eine keramische Masse folgender Zusammensetzung:

| | |
|---|---|
| Ton (weißbrennend) | 13-40 Gew.-% |
| Wollastonit | 0-25 Gew.-% |
| Kalium-Feldspat | 8-32 Gew.-% |
| Natrium-Feldspat | 5-15 Gew.-% |
| Lithium-Feldspat | 0-12 Gew.-% |
| Nephelin-Syenit | 3-15 Gew.-% |
| Fritte | 0-25 Gew.-% |
| ZnO | 0-5 Gew.-% |
| calcinierter Kaolin/Ton | 6-24 Gew.-% |
| calcinierte Tonerde | 3-16 Gew.-% |
| $ZrSiO_4$ | 0-10 Gew.-% |

eingesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 300 532 (KONINKLIJKE MOSA B.V.) 25. Januar 1989 <br> * Ansprüche 1-10 * <br> --- | 1-3 | C04B41/87 <br> C04B33/00 |
| A | DE-C-660 928 (SCHÜTTE AG) 12. Mai 1938 <br> * das ganze Dokument * <br> --- | 1-3 | |
| A | GB-A-417 125 (A.F. BERRY) 25. Oktober 1934 <br> * das ganze Dokument * <br><br> ----- | 1-3 | |
| | | | **RECHERCHIERTE SACHGEBIETE (Int. Cl.5)** <br><br> C04B |

Der vorliegende Recherchenbericht wurde für alle Patentansprüche erstellt

| Recherchenort | Abschlußdatum der Recherche | Prüfer |
|---|---|---|
| DEN HAAG | 23 JANUAR 1992 | LUETHE H. |